(19) Europäisches Patentamt / European Patent Office / Office européen des brevets

(11) **EP 4 647 807 A1**

(12) **DEMANDE DE BREVET EUROPEEN**

(43) Date de publication:
**12.11.2025 Bulletin 2025/46**

(21) Numéro de dépôt: **25172602.2**

(22) Date de dépôt: **25.04.2025**

(51) Classification Internationale des Brevets (IPC):
**G01S 7/4865** (2020.01)     **G01F 23/292** (2006.01)
**G01S 17/10** (2020.01)     **G01S 17/88** (2006.01)

(52) Classification Coopérative des Brevets (CPC):
**G01S 7/4865; G01F 23/2928; G01S 17/10; G01S 17/88**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **07.05.2024 FR 2404794**

(71) Demandeur: **STMicroelectronics International N.V.**
**1228 Plan-les-Ouates, Geneva (CH)**

(72) Inventeurs:
• **LEMARCHAND, Olivier**
  **38000 Grenoble (FR)**
• **MONTEITH, Roger**
  **Edinburgh EH10 6SW (GB)**
• **VASSAL, Robin**
  **38100 Grenoble (FR)**
• **GROTARD, Herve**
  **13100 Aix en Provence (FR)**

(74) Mandataire: **Casalonga**
**Casalonga & Partners**
**Bayerstraße 71/73**
**80335 München (DE)**

(54) **PROCÉDÉ AMÉLIORE DE MESURE DE GRANDEURS PHYSIQUES D'UN CONTENANT PAR UN CAPTEUR TEMPS DE VOL**

(57) Selon un aspect, il est proposé un procédé de mesure d'une grandeur physique (HAUT, NIV, DIAM, X0, Y0) d'un contenant (12) placé dans une zone de détection (DET), en utilisant un capteur temps de vol (100). Le procédé comprend, par un processeur (107B), les étapes suivantes : recevoir (300) un histogramme (H, HD) voire une matrice d'histogrammes (MATRIX, DIFF$_{MATRIX}$) générés à partir d'une impulsion lumineuse émise par un capteur temps de vol et réfléchie par le contenant, chaque histogramme (H, HD) étant formé de bins (B$_j$) correspondant à des temps de vol distincts ; extraire (310), par histogramme, un premier bin d'histogramme (FSB) caractérisant en premier un front montant d'impulsion, de sorte à obtenir une matrice de premiers bins d'histogrammes (M$_{FSB}$) ; et déterminer (320) la hauteur, le diamètre, la position du contenant et/ou la hauteur de remplissage du contenant à partir de la matrice de premiers bins d'histogrammes.

EP 4 647 807 A1

**Description**

DOMAINE TECHNIQUE

Des modes de réalisation et de mise en œuvre concernent les dispositifs de mesure d'objet, en particulier la mesure d'une grandeur physique relative à un objet dans une zone de détection par un capteur temps de vol.

CONTEXTE TECHNIQUE

Les imageurs à temps de vol (ToF pour « Time of Flight » en anglais), également appelés capteurs ToF, ont été largement utilisés récemment pour diverses applications, telles que la reconnaissance faciale et gestuelle, la détection et la télémétrie par la lumière (LiDAR), la réalité virtuelle, la réalité augmentée et la robotique autonome, en raison de leur faible coût par rapport à d'autres capteurs tels que les caméras. Un système de télémétrie ToF utilise un imageur ToF pour mesurer la distance d'un objet (par exemple, une cible). Pour mesurer un objet, le système de télémétrie ToF demande au capteur ToF d'envoyer un signal lumineux (par exemple, des impulsions lumineuses telles qu'un laser ou une lumière infrarouge) vers l'objet et mesure le temps nécessaire au signal pour atteindre l'objet et revenir à l'imageur ToF.

Une diode à effet d'avalanche déclenchée à photon unique (SPAD pour « Single Photon Avalanche Diode » en anglais) peut être utilisée comme détecteur de lumière réfléchie. Dans certaines applications, un réseau ou matrice de SPAD est fourni comme capteur (ci-dessous matrice SPAD) afin de détecter une impulsion lumineuse réfléchie. Un photon réfléchi peut générer une porteuse dans le SPAD par effet photoélectrique. La porteuse générée par le photon peut déclencher un courant d'avalanche dans une ou plusieurs SPAD d'une matrice SPAD. Le courant d'avalanche peut signaler un événement, à savoir qu'un photon a été détecté. Les informations relatives à l'intensité réfléchie, sorte de compteur de signaux, sont émises sous forme d'une matrice d'histogrammes correspondant à la matrice SPAD. L'histogramme de chaque SPAD comprend une pluralité de groupes d'intervalles ou classes ou cellules ou « bins » d'histogramme, où chaque bin d'histogramme correspond à un temps de déplacement ou à une distance (plus précisément à une plage étroite de temps ou de distance) de la matrice SPAD, et la valeur (par exemple, le nombre de signaux) de chaque bin d'histogramme correspond au nombre d'événements de courant d'avalanche détectés (par exemple, le nombre de photons détectés).

L'histogramme d'un SPAD doit être traité pour en extraire des informations utiles, telles que le nombre de cibles détectées, les distances des cibles, etc.

On utilise les capteurs ToF pour déterminer la présence d'un contenant sous un distributeur de produit tel que du liquide. Une utilisation typique a trait à la détermination de la présence d'une tasse ou équivalent sous un distributeur de boisson (e.g., machine à café). Cette détermination permet par exemple de contrôler automatiquement le versement de la boisson seulement en présence d'une tasse.

Des améliorations supplémentaires, telles un contrôle automatique du volume à verser ou l'arrêt automatique du versement lorsque le contenant est plein, nécessitent la détermination d'autres grandeurs physiques relatives au contenant. La hauteur du contenant et/ou son niveau de remplissage sont par exemple utiles.

Néanmoins, les capteurs ToF ne sont pas adaptés à la détermination précise de telles grandeurs physiques en présence de contenants réfléchissants, tels des contenants en verre ou en matériau brillant.

Par exemple, le signal utile pour déterminer la hauteur d'une tasse, à savoir celui des photons réfléchis par le rebord supérieur de la tasse, s'avère très faible par rapport au signal total reçu au niveau de chaque SPAD. En effet, peu de photons sont réfléchis par le rebord supérieur et reçus en retour par la SPAD (et plus généralement le capteur ToF), en raison notamment de la faible épaisseur de la tasse, alors qu'un très grand nombre de photons émis vers la tasse sont reçus par la SPAD avec un temps de vol allongé, du fait de leurs réflexions multiples à l'intérieur de la tasse.

RESUME

Il en résulte une tendance à la surestimation des distances mesurées, et par conséquence à une sous-estimation préjudiciable de la hauteur de la tasse.

Il existe donc un besoin d'améliorer les techniques de mesure par temps de vol (ToF) de grandeurs physiques, qui soient applicables non seulement aux contenants réfléchissants mais également à tout type de contenant.

Selon un aspect, il est proposé un procédé de mesure d'une grandeur physique d'un contenant placé dans une zone de détection, en utilisant un capteur temps de vol, le procédé comprenant, par un processeur:

    la réception d'au moins un histogramme généré à partir d'une impulsion lumineuse émise par un capteur temps de vol et réfléchie par le contenant, l'histogramme étant formé de classes dites « bins » correspondant à des temps de vol distincts,
    l'extraction, dans l'histogramme, d'un premier bin d'histogramme caractérisant en premier un front montant d'impulsion, et la détermination de la grandeur physique à partir du premier bin d'histogramme.

On entend par « premier bin d'histogramme » le premier bin (la première classe) dans l'ordre des bins formant l'histogramme, depuis le bin (classe) correspondant au temps de vol le plus court au bin (classe) correspondant au temps de vol le plus long.

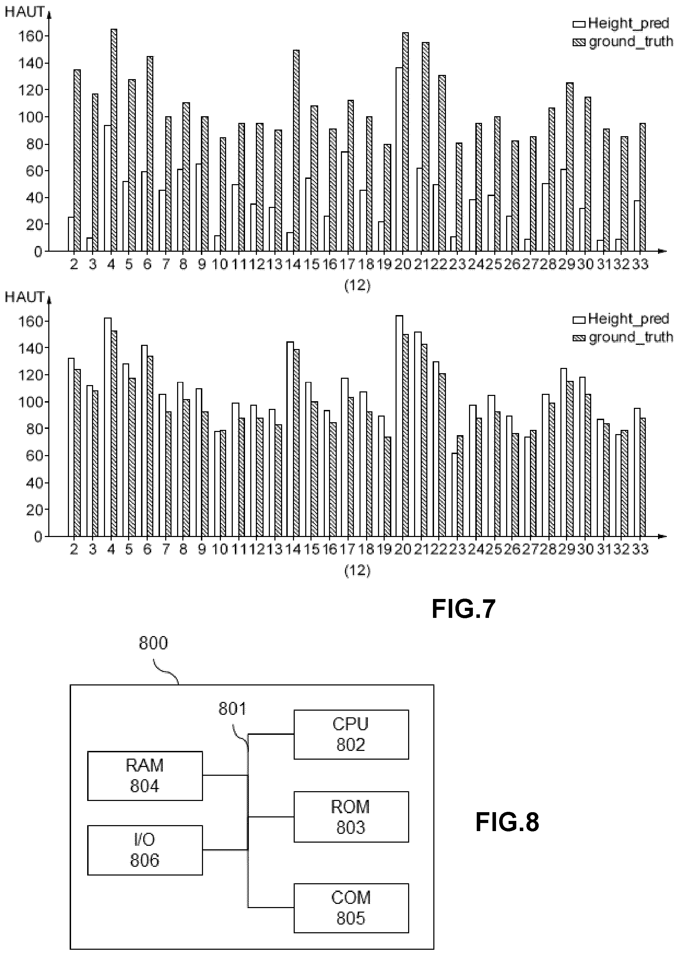

En sélectionnant le premier bin pertinent de l'histogramme correspondant aux premiers photons réfléchis détectés, une grande partie des photons multi-réfléchis est écartée. Le signal utile pour déterminer la grandeur physique souhaitée est ainsi réhaussé, résultant en une meilleur estimation, comme cela est illustré par la **Figure 7** discutée plus bas.

Selon un deuxième aspect, il est proposé un système de mesure par temps de vol d'une grandeur physique d'un contenant placé dans une zone de détection, le système comprenant :

> un capteur temps de vol configuré pour générer une matrice d'histogrammes à partir d'une impulsion lumineuse émise par un capteur temps de vol et réfléchie par le contenant, chaque histogramme étant formé de classes dites « bins » correspondant à des temps de vol distincts, et
> un processeur configuré pour recevoir la matrice d'histogrammes, pour extraire, par histogramme, un premier bin d'histogramme caractérisant en premier un front montant d'impulsion, de sorte à obtenir une matrice de premiers bins d'histogrammes, et pour déterminer la grandeur physique à partir de la matrice de premiers bins d'histogrammes.

Le dispositif présente les mêmes avantages que ceux du procédé précité. Il permet notamment de contrôler un distributeur de boisson. Aussi, selon un troisième aspect, il est proposé un distributeur de boisson comprenant une zone de positionnement d'un contenant pour y distribuer une boisson et un système de mesure par temps de vol tel que décrit ci-dessus. En particulier, le distributeur de boisson présente un mécanisme de commande de distribution de boisson dans le contenant qui est contrôlé par une grandeur physique du contenant déterminée par le système de mesure par temps de vol.

Des caractéristiques facultatives de modes de réalisation sont définies dans les revendications annexées. Certaines de ces caractéristiques sont expliquées ci-dessous en référence à un procédé, tandis qu'elles peuvent être transposées en caractéristiques de dispositif.

Dans un mode de réalisation, une pluralité d'histogrammes, formant matrice, générés à partir de l'impulsion lumineuse est reçue, chaque histogramme étant formé de bins correspondant à des temps de vol distincts,

> un premier bin d'histogramme caractérisant en premier un front montant d'impulsion est extrait de chaque histogramme, de sorte à obtenir une matrice de premiers bins d'histogrammes, et
> la grandeur physique est déterminée à partir de la matrice de premiers bins d'histogrammes.

Cette approche matricielle peut s'appuyer sur un capteur ToF multi-zones, permettant notamment le calcul de grandeurs physiques relatives à deux dimensions, tel le diamètre du contenant, ou sa position dans la zone de détection.

Dans un mode de réalisation, le procédé comprend une modification du premier bin d'histogramme par interpolation entre le premier bin extrait (correspondant à un premier temps de vol) et le bin le précédant dans l'histogramme (correspondant à un deuxième temps de vol).

Dans le cas d'une matrice d'histogrammes (capteur ToF multi-zones), on modifie la matrice de premiers bins d'histogrammes par interpolation entre chaque premier bin extrait et le bin le précédant dans le même histogramme. On obtient ainsi une matrice de premiers bins modifiée.

On entend par « bin le précédant » le bin (classe) précédant immédiatement le premier bin (classe) dans l'ordre des bins (classes) formant l'histogramme.

L'interpolation permet d'affiner la valeur du bin (selon l'axe des abscisses de l'histogramme) pour obtenir un ou des bins plus précis. A titre d'exemple, le premier bin de l'histogramme peut être un entier, et l'interpolation permet d'obtenir une valeur décimale plus précise.

Dans un mode de réalisation, l'interpolation comprend une interpolation linéaire fonction d'un seuil de premier bin utilisé pour identifier le premier bin des histogrammes, et fonction des amplitudes respectives du premier bin et du bin le précédant.

Dans un mode de réalisation, la détermination de la grandeur physique comprend la conversion du premier bin extrait en une hauteur du contenant ou une hauteur de remplissage du contenant.

Dans le cas d'une matrice d'histogrammes (capteur ToF multi-zones), la détermination de la grandeur physique comprend la sélection de la valeur minimale dans la matrice de premiers bins d'histogrammes et la conversion de la valeur minimale sélectionnée en une hauteur du contenant ou une hauteur de remplissage du contenant. Le temps de vol correspondant au bin extrait / sélectionné peut alors être converti en distance. En variante, la conversion est réalisée avant la sélection. La distance obtenue peut être retranchée à une distance initiale (e.g., la distance à la surface de la zone de détection) pour obtenir une hauteur (de tasse ou de remplissage par exemple).

Dans un mode de réalisation, la détermination de la grandeur physique comprend :

> la conversion de la matrice d'histogrammes en une matrice de fronts montants identifiant des bins ou temps de vol ou distances correspondant au front montant de l'impulsion (typiquement détectés à 50% ou 60% du pic d'impulsion) dans les histogrammes,
> la génération de deux matrices binaires correspondant respectivement à une matrice signalant les bins ou temps de vol ou distances de la matrice de fronts montants qui sont inférieurs à une première valeur seuil et une matrice signalant les bins ou temps de vol ou distances de la matrice de fronts montants qui sont supérieurs à une deuxième valeur seuil,

la génération d'une troisième matrice binaire signalant les bins ou temps de vol ou distances correspondant aux bins de la matrice de premiers bins d'histogrammes qui sont inférieurs à une troisième valeur seuil, et la détermination d'un cercle (ou tout autre forme prédéfinie) dans la matrice d'histogrammes, à partir des trois matrices binaires.

Il est ainsi possible d'obtenir le diamètre du contenant ainsi que sa position (par exemple son centre) dans la zone de détection. La connaissance du diamètre (en plus de la hauteur) permet typiquement d'estimer la quantité de produit à verser, et indirectement la quantité de café, thé ou équivalent qu'il convient d'infuser dans le cas d'une boisson. De façon similaire, la connaissance de la position du contenant permet de déterminer par exemple les buses à utiliser pour verser le produit sans perte. Une amélioration de l'automatisation des distributeurs de produit/boisson peut ainsi être obtenue.

Dans un mode de réalisation particulier, la détermination de la grandeur physique comprend en outre :

la détermination d'une valeur de distorsion pour chaque histogramme de la matrice d'histogrammes, la détermination d'une valeur de distorsion étant fonction des trois bins correspondant respectivement au pic d'impulsion, au front montant de l'impulsion et au front descendant de l'impulsion, et

la génération d'une quatrième matrice binaire signalant les histogrammes ayant une faible valeur de distorsion (i.e., sous une valeur seuil de distorsion), procédé dans lequel la détermination du cercle (ou tout autre forme prédéfinie) est également fonction de la quatrième matrice binaire.

Les inventeurs ont notamment constaté que les histogrammes correspondant au rebord du contenant présentent une forme inattendue. La prise en compte de la distorsion des histogrammes contribue ainsi à une meilleure détection des dimensions et position du contenant.

Dans un mode de réalisation, le procédé comprend la réception d'un histogramme généré par le capteur temps de vol, la soustraction d'un histogramme de référence à l'histogramme reçu pour obtenir un histogramme de différences,

procédé dans lequel ladite extraction est effectuée sur l'histogramme de différences.

Dans le cas d'une matrice d'histogrammes (capteur ToF multi-zones), le procédé comprend la réception d'une matrice d'histogrammes générée par le capteur temps de vol, la soustraction d'une matrice d'histogrammes de référence à la matrice d'histogrammes reçue pour obtenir une matrice d'histogrammes de différences,

procédé dans lequel ladite extraction est effectuée sur la matrice d'histogrammes de différences.

Cette disposition permet de supprimer, de l'analyse, des éléments interférant, susceptibles d'altérer la grandeur physique à mesurer. Aussi, un filtrage par différences est réalisé.

L'histogramme de référence ou la matrice d'histogrammes de référence peut typiquement être acquis au préalable par le capteur temps de vol.

A titre d'exemple, une image (histogramme ou matrice d'histogrammes) de la zone de détection peut être acquise avant d'y placer le contenant. Il est ainsi possible de supprimer, dans les histogrammes, le signal de détection de la paroi arrière d'un distributeur de boisson présent dans la zone de détection, ou de tout autre élément présent. La hauteur du contenant peut ainsi être déterminée plus précisément.

Dans un autre exemple décrit par la suite, une image (histogramme ou matrice d'histogrammes) du contenant vide dans la zone de détection peut être acquise avant de procéder à son remplissage. Il est ainsi possible de supprimer, dans les histogrammes, le signal de détection du contenant (vide). La hauteur de remplissage du contenant peut ainsi être déterminée plus précisément.

Dans un autre exemple également, une image (histogramme ou matrice d'histogrammes) du contenant dans la zone de détection dans lequel un remplissage a débuté peut être acquise avant de poursuivre le remplissage. Il est ainsi possible de supprimer, dans les histogrammes, le signal de détection du contenant (vide) ainsi que celui d'éventuels reflets particuliers au produit versé et celui résultant du jet de remplissage. La hauteur de remplissage du contenant peut ainsi être déterminée en temps réel avec une meilleure précision.

Dans un mode de réalisation, l'extraction du premier bin d'un histogramme comprend :

obtenir un seuil de premier bin fonction d'un pic d'impulsion de l'histogramme. Il faut entendre par « pic d'impulsion » l'amplitude maximale des bins de l'histogramme, et

déterminer le premier bin, dans l'ordre des bins de l'histogramme, dont l'amplitude dépasse le seuil de premier bin.

On identifie ainsi le début du front montant de l'impulsion réfléchie, partie la plus susceptible de correspondre à la distance souhaitée.

Dans un mode de réalisation, le seuil de premier bin est déterminé à partir d'un pourcentage prédéfini du pic d'impulsion de l'histogramme.

Dans un mode de réalisation particulier, le procédé comprend la détermination d'un seuil de bruit ambiant lors de l'impulsion lumineuse (typiquement réalisée par le capteur ToF juste avant ou après l'impulsion, entre deux impulsions consécutives), le seuil de premier bin étant fixé au moins égal au seuil de bruit ambiant. Le bruit ambiant correspond au signal résultant des photons de l'éclairage ambiant, indépendamment de l'impulsion lumineuse de mesure émise par le capteur ToF.

En particulier, un bruit ambiant peut être déterminé pour chaque sous-zone dans le cas d'un capteur ToF multi-zones, donc pour chaque histogramme de la matrice d'histogrammes.

Avec la disposition ci-dessus, on filtre ainsi les bins (classes) susceptibles de relever seulement du bruit ambiant.

Dans un mode de réalisation, l'extraction du premier bin de l'histogramme comprend en outre un ou plusieurs traitements parmi : ignorer, dans l'histogramme, une impulsion dont la largeur est inférieure à un seuil de largeur. Typiquement la largeur d'une impulsion peut être déterminée par la largeur entre la moitié (ou 60% ou toute autre valeur) du front montant et la moitié (ou 60% ou autre) du front descendant, et ignorer, dans l'histogramme, un bin dont l'amplitude est inférieure à un seuil de bruit prédéterminé pour ce bin.

Les impulsions parasites ou résultant du bruit peuvent ainsi être écartées de l'analyse.

Ces traitements peuvent être mis en œuvre pour chaque histogramme dans le cas d'une matrice d'histogrammes (capteur ToF multi-zones).

Dans un mode de réalisation particulier, le procédé comprend : la détermination, pour chaque bin de l'histogramme, d'un seuil de bruit courant à partir de l'amplitude du bin correspondant dans l'histogramme et d'une mesure de bruit ambiant courant,

la détermination, pour chaque bin d'un histogramme, d'un seuil de bruit de référence à partir de l'amplitude du bin correspondant dans un histogramme de référence et d'une mesure de bruit ambiant de référence, et

l'obtention d'un seuil de bruit prédéterminé pour chaque bin, par l'addition du seuil de bruit courant et du seuil de bruit de référence déterminés pour ce bin.

Ces opérations peuvent être mises en œuvre pour chaque bin de chaque histogramme dans le cas d'une matrice d'histogrammes (capteur ToF multi-zones).

La mesure de bruit ambiant courant est typiquement réalisée de façon concomitante (e.g., juste avant ou juste après) à l'acquisition de l'histogramme (ou de la matrice d'histogrammes). De même, la mesure de bruit ambiant de référence est préférentiellement réalisée de façon concomitante à une acquisition de l'histogramme de référence (ou de la matrice de référence).

BREVE DESCRIPTION DES FIGURES

D'autres avantages et caractéristiques de l'invention apparaîtront à l'examen de la description détaillée de modes de réalisation et de mise en œuvre, nullement limitatifs, et des dessins annexés sur lesquels :

[Fig 1] ;
[Fig 2] ;
[Fig 3] ;
[Fig 4] ;
[Fig 5] ;
[Fig 6] ;
[Fig 7] ; et
[Fig 8] illustrent schématiquement des modes de mise en œuvre et de réalisation de l'invention.

Par souci de clarté, de mêmes éléments sont désignés par de mêmes références dans les différentes figures. Par ailleurs, les diverses figures ne sont pas tracées à l'échelle, comme cela est habituel dans la représentation des circuits intégrés.

DESCRIPTION DETAILLEE

La présente invention sera décrite dans le contexte de systèmes de télémétrie par temps de vol (ToF) et, dans des modes de réalisation particuliers, du système de télémétrie ToF capable d'estimer de façon précise des grandeurs physiques relatives à un contenant disposé dans une zone de détection.

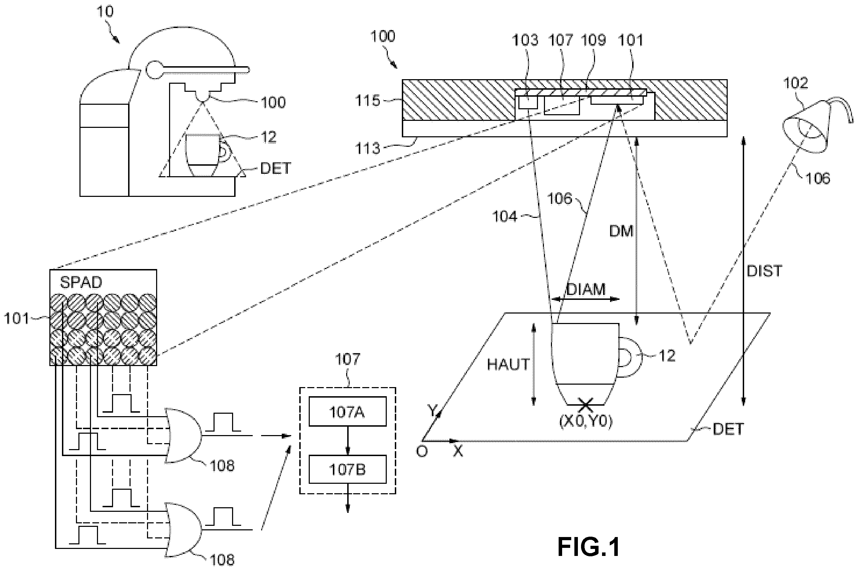

La **Figure 1** illustre un système de télémétrie à temps de vol (ToF) 100, dans un mode de réalisation. Un tel système ToF 100 peut être mis en œuvre au sein d'un distributeur de produit dans un contenu.

Comme illustré sur la Figure, un distributeur de boisson, ici une machine à café 10, est muni d'un système de télémétrie ToF 100 pour estimer des grandeurs physiques d'un contenant, ici une tasse 12, disposée dans la zone de détection DET présentant un référentiel (O,X,Y) et dont la surface est située à une distance DIST du système ToF 100. Cette distance peut être initialement mesurée par le système ToF 100 ou préprogrammée.

Pour des raisons de simplicité, toutes les caractéristiques du système de télémétrie ToF 100 ne sont pas illustrées. En outre, pour faciliter la discussion, la **Figure 1** illustre un contenant 12 (par exemple, une tasse) et une source ambiante 102, étant entendu que le contenant 12 et la source ambiante 102 ne font pas partie du système de télémétrie ToF 100.

La partie de droite de la **Figure 1** illustre la vue en coupe du système de télémétrie ToF 100, tandis que la partie inférieure gauche de la figure illustre les détails de certains composants du système de télémétrie ToF 100, tels qu'une vue de dessous de la matrice SPAD 101, les impulsions de sortie (par exemple, indiquant les événements de courant d'avalanche) générées par les SPAD dans la matrice SPAD 101, des combinatoires OR 108 utilisées pour combiner les impulsions de sortie, et des détails de l'unité de traitement 107.

Comme illustré à la **Figure 1,** le système de télémétrie ToF 100 comprend une matrice SPAD 101, une source lumineuse 103 (également appelée émetteur) et une unité de traitement 107 fixée à un substrat 109 (par exemple, une carte de circuit imprimé (PCB), un interposeur, ou similaire). La **Figure 1** illustre également un boîtier d'assemblage 115 (par exemple, un boîtier de protection, une boîte, une coque ou autre). La matrice SPAD 101, la source lumineuse 103, l'unité de traitement 107 et le substrat 109 sont situés à l'intérieur d'un espace entouré par le boîtier d'assemblage 115. Un verre de protection 113 peut être fixé aux surfaces inférieures des parois latérales du boîtier d'assemblage 115, formant ainsi un espace clos pour protéger les composants disposés dans l'espace.

La source lumineuse 103 est un circuit configuré pour générer un signal lumineux 104 destiné à éclairer la zone de détection DET et par conséquent tout contenant 12 s'y trouvant. La source de lumière 103 peut être, par exemple, un laser à cavité verticale (VCSEL), une diode électroluminescente (LED), un dispositif infrarouge (IR), ou autre. Le signal lumineux 104 peut comprendre une pluralité d'impulsions lumineuses. Le signal lumineux 106 réfléchi par le contenant 12 est reçu par la matrice SPAD 101. En pratique, une lentille optique peut être disposée devant le réseau SPA 101 pour concentrer le signal lumineux provenant de différentes directions vers le réseau de SPAD 101. Ce dernier comprend plusieurs SPAD disposés, par exemple, en lignes et en colonnes. Les signaux de sortie SPAD de la matrice SPAD 101 sont envoyés à un circuit de génération d'histogrammes ToF 107A pour générer un histogramme ou une matrice d'histogrammes MATRIX. Les méthodes de génération d'histogrammes à l'aide d'une matrice SPAD sont connues dans l'art, et les détails ne sont pas répétés.

Des imageurs ToF générant des histogrammes ou des matrices d'histogrammes sont connus, par exemple les capteurs ToF multizones commercialisés par la société ST Microelectronics sous les références VL53L8CH et VL53L7CH. La résolution de tels capteurs est configurable jusqu'à 64 sous-zones (8x8 sous-zones) et la résolution des histogrammes jusqu'à 128 classes sur une zone de détection DET s'étendant jusqu'à environ 400 cm avec un champ de vision diagonal de 65°. En variante, un capteur ToF simple zone peut être utilisé dans certaines applications.

Les classes d'un histogramme correspondent aux cellules ou groupes d'intervalles, également dénommés « bins » par l'homme de l'art, correspondant à valeurs d'abscisse représentées par chaque bâton de l'histogramme. Par la suite, il sera fait référence principalement aux « bins » pour désigner ces classes.

Chaque sous-zone d'un capteur ToF multi-zones comporte une ou plusieurs SPAD. Une matrice de 8x8 histogrammes peut être générée à une fréquence comprise entre 5 et 60 Hz. Bien entendu, d'autres capteurs ToF ayant un plus ou moins grand nombre de sous-zones de capteur, ainsi que d'autres caractéristiques de fonctionnement peuvent être utilisés.

Dans l'exemple de la **Figure 1,** le circuit de génération d'histogrammes ToF 107A fait partie de l'unité de traitement 107. Le circuit de génération d'histogrammes ToF 107A comptabilise les photons reçus par sous-zone en comptant le nombre de signaux reçus en sortie de l'arbre combinatoire OR 108 combinant les SPAD de la sous-zone concernée. Le cumul est effectué pour chaque période temporelle correspondant à un bin (classe) de l'histogramme, le résultat du cumul étant stocké comme amplitude de ce bin dans l'histogramme. L'ensemble des cumuls regroupés en histogrammes pour les différentes sous-zones de capteur forme la matrice d'histogrammes MATRIX. Cette matrice peut également être vue comme étant une « image » d'histogrammes, par exemple de résolution 8x8 dans l'exemple ci-dessus.

Dans le cas d'un capteur ToF simple zone, une seule combinatoire OR 108 est utilisée, sommant l'ensemble des signaux reçus par tous les SPAD.

L'unité de traitement 107 comprend également un processeur 107B qui reçoit et traite l'histogramme ou la matrice d'histogrammes. Le processeur 107B peut être, par exemple, un microcontrôleur, un processeur de signaux numériques (DSP), un circuit intégré à application spécifique (ASIC), ou autre. Le processeur 107B traite la matrice d'histogrammes pour en extraire des informations utiles, telles que des mesures de grandeurs physiques relatives au contenant 12, comme décrit par la suite. A cet effet, le processeur 107B est configuré pour exécuter une ou plusieurs méthodes divulguées ci-après afin d'estimer par exemple la hauteur du contenant 12, son diamètre, sa position dans le référentiel (O,X,Y), son niveau de remplissage en boisson (ou de façon équivalente, la hauteur de remplissage).

Notamment, comme cela ressortira de la suite, la détermination de la hauteur du contenant ou du niveau de remplissage peut comprendre la détermination de la distance d'une cible la plus proche (par exemple le rebord supérieur du contenant 12 ou le niveau du liquide versé dans une « image » d'histogrammes dans laquelle a été supprimé le signal relatif au contenant 12) par rapport au système de télémétrie ToF 100. Dans certains cas, le circuit de génération d'histogrammes ToF 107A et le processeur 107B sont intégrés dans une même puce semi-conductrice (par exemple, dans une seule puce de circuit intégré). Dans d'autres modes de réalisation, le circuit de génération d'histogrammes ToF 107A et le processeur 107B sont formés dans des matrices semi-conductrices différentes (par exemple, séparées).

Les mesures de grandeurs physiques obtenues par le processeur 107B peuvent être exploitées par lui-même ou transmises à un contrôleur de distribution (non représenté), afin de générer des commandes visant au contrôle de la distribution d'un produit dans le contenant 12, par exemple le versement d'une boisson dans la tasse 12 par le distributeur 10.

A titre illustratif, la préparation d'une quantité adaptée de boisson à verser (tant dans le volume à délivrer que dans les matières premières à utiliser - par exemple quantité de poudre à mélanger, café ou thé à infuser) peut être contrôlée automatiquement en fonction d'une mesure de la hauteur de la tasse 12 obtenue selon les enseignements du présent document, mais également d'un diamètre de la tasse 12 toujours obtenu selon les enseignements du présent document.

De même, l'arrêt du versement de la boisson peut être contrôlé automatiquement en fonction du niveau de remplissage de la tasse 12 (donc la hauteur du liquide par rapport à la hauteur de la tasse) obtenue selon les enseignements du présent document. Également, l'activation ou non du versement en cas de positionnement correct de la tasse 12, voire l'activation de certaines buses de délivrance de la boisson, peuvent être contrôlées automatiquement en fonction d'un positionnement de la tasse 12 obtenu selon les enseignements du présent document.

Les composants utilisés pour émettre des impulsions lumineuses, recevoir les impulsions lumineuses réfléchies et générer la matrice d'histogrammes, lesquels comprennent la source lumineuse 103, la matrice SPAD 101 et le circuit de génération d'histogrammes ToF 107A, sont collectivement désignés sous le nom d'imageur ToF (également appelé capteur ToF), dans certains modes de réalisation. Par conséquent, le système de télémétrie ToF 100 comprend l'imageur ToF et le processeur 107B, et le processeur 107B traite la matrice d'histogrammes MATRIX générée par l'imageur ToF.

La détermination de la hauteur du contenant ou du niveau de remplissage peut être réalisée à l'aide d'un seul histogramme. Aussi, un capteur ToF simple zone peut être utilisé pour une telle application.

La détermination du diamètre du contenant ainsi que sa position dans la zone de détection nécessite une matrice d'histogrammes. Aussi, un capteur ToF multi-zones est utilisé pour une telle application.

Dans la suite du document, il est principalement fait référence à un capteur ToF multi-zones (et donc une matrice d'histogrammes). Néanmoins, l'homme de l'art est à même d'appliquer les enseignements suivants à un histogramme seul, généré par un capteur ToF simple zone.

La **Figure 1** illustre la source lumineuse 103, le réseau SPAD 101, et l'unité de traitement 107 en tant que composants distincts fixés au substrat 109. Il s'agit simplement d'un exemple non limitatif. Dans certains modes de réalisation, la source lumineuse 103, la matrice SPAD 101 et le circuit de génération d'histogrammes ToF 107A sont intégrés dans un seul circuit intégré sous la forme d'un imageur ToF intégré. Dans certains modes de réalisation, la source lumineuse 103, la matrice SPAD 101, le circuit de génération d'histogrammes ToF 107A et le processeur 107B sont intégrés dans un seul circuit intégré en tant que système de télémétrie ToF intégré.

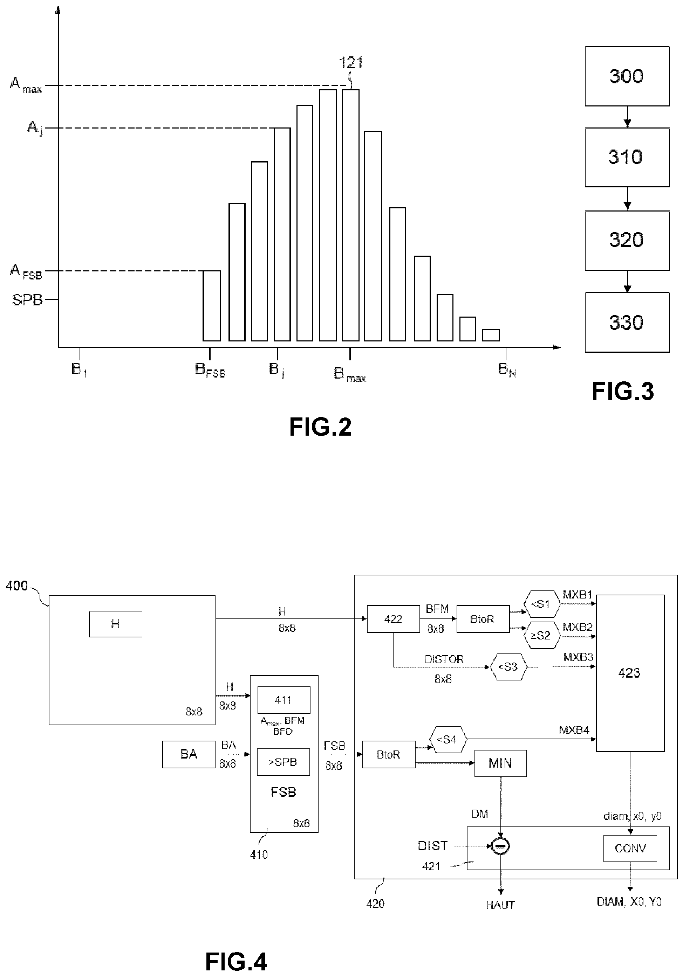

La **Figure 2** illustre un des histogrammes de la matrice MATRIX générée par un imageur ToF, dans un mode de réalisation. L'histogramme de l'exemple de la figure comporte plusieurs bins ou classes (également appelées bins ou classes d'histogramme), notées $B_1$ à $B_N$ ($N$ le nombre de bins). La valeur ou amplitude de chaque classe (par exemple, le long de l'axe des ordonnées) de l'histogramme, notée $A_1$ à $A_N$, représente le nombre de signaux pendant une durée (par exemple, une durée fixe) du bin. L'emplacement 'j' (par exemple, le long de l'axe des abscisses), ou position ou numéro d'index, de chaque bin de l'histogramme correspond à un temps de vol et donc à une distance $D_1$ à $D_N$ (ou à une plage étroite de distances) par rapport à la matrice SPAD 101. Il convient de noter que le temps de vol représente le temps d'aller-retour du signal lumineux. Ainsi, la distance $D_j$ représente la moitié de la distance parcourue pendant le temps de vol.

Pendant le traitement de chaque histogramme de la matrice MATRIX, lorsqu'une cible (le rebord supérieur du contenant 12, ou le niveau du liquide de remplissage) est identifiée comme étant située dans un bin $B_j$ de l'histogramme, la distance $D_j$ de ce bin de l'histogramme peut être utilisée comme distance de la cible (par exemple, la distance entre la matrice SPAD 101 et la cible). Dans le présent document, on suppose que la source lumineuse 103 et la matrice SPAD 101 sont situées au même endroit, de sorte que la distance entre la matrice SPAD 101 et la cible est considérée comme identique à la distance entre la source lumineuse 103 et la cible.

Pour faciliter la discussion, une distance $D_j$ est attribuée à chaque bin $B_j$ de chaque histogramme (par exemple, une distance correspondant au centre du bin), et la distance correspondant à un bin est également appelée distance de bin. L'indice 'j' de l'emplacement ou position, également appelé indice ou numéro de bin, peut être utilisé pour indiquer la distance de l'emplacement. Par exemple, en supposant que le premier bin (par exemple, le bin le plus à gauche ou le plus ancien) de l'histogramme a un indice de 1, le deuxième bin a un indice de 2, et ainsi de suite, la distance du j-ième bin peut être calculée comme $((j-1)+0,5)d$, où $d$ est la distance parcourue par le signal lumineux pendant une durée égale à la moitié d'un intervalle de temps $T$, et l'intervalle de temps $T$ est la durée d'un bin de l'histogramme. L'intervalle de temps $T$ est également appelé largeur temporelle de bin, et la distance $d$ est également appelée largeur de bin.

Préférentiellement, tous les histogrammes de la matrice MATRIX sont formés avec les mêmes bins. En variante, des bins différents peuvent être utilisés. De même, au sein d'un même histogramme, les bins sont préférentiellement de même largeur, mais peuvent en variante différer l'un de l'autre.

Dans l'exemple de la **Figure 2,** l'histogramme comprend un unique pic 121, qui peut être causé par la présence du contenant 12 dans la zone de détection DET.

La **Figure 3** illustre, à l'aide d'un ordinogramme, des étapes d'un procédé selon des modes de réalisation. Ces étapes sont par exemple mises en œuvre par le processeur 107B, ayant pour objet la mesure d'au moins une grandeur physique d'un contenant, telle la tasse 12 de la **Figure 1,** placé dans une zone de détection DET, en utilisant un capteur temps de vol tel l'imageur ToF 100 de la **Figure 1.**

Ce procédé peut être réalisé au fil de l'acquisition de nouvelles images par le capteur ToF, par exemple à une fréquence comprise entre 5 Hz et 60 Hz.

Le procédé comprend, entre autres, une étape de réception (300) d'une matrice d'histogrammes, par exemple la matrice MATRIX ci-dessus, générés à partir d'une impulsion lumineuse émise par le capteur temps de vol 100 et réfléchie par le contenant 12, chaque histogramme (comme celui de la **Figure 2**) étant formé de bins ou classes $B_j$ correspondant à des temps de vol distincts. Il comprend également une étape d'extraction (310), histogramme par histogramme, d'un premier bin d'histogramme, notée $B_{FSB}$ ou FSB (pour « first significant bin » en anglais) par la suite, caractérisant en premier un front montant d'impulsion, de sorte à obtenir une matrice de premiers bins d'histogrammes, notée $M_{FSB}$. Dans les bins ordonnés $B_1$ à $B_N$, celui caractérisant en premier un front montant est l'un de ceux à la base du front montant, donc l'un de ceux recevant les premiers photons réfléchis de l'impulsion. On obtient ainsi une matrice représentant les bins associés aux premiers photons reçus par chacune des sous-zones de détection du capteur ToF. Cette matrice de premiers bins d'histogrammes $M_{FSB}$ est plus adaptée que la matrice classique obtenue du capteur ToF, pour déterminer (320) alors la ou les grandeurs physiques.

Typiquement, dans une application relative à un distributeur de boisson, les étapes ci-dessus, et détaillées par la suite, permettent de déterminer tout ou partie de la hauteur, le diamètre et la position du contenant ainsi que la hauteur de remplissage (ou taux de remplissage) de ce dernier en boisson.

Le ou les grandeurs physiques ainsi déterminées peuvent être utilisées (330) dans le contrôle d'automatisation du distributeur de boisson 10. Par exemple, l'activation ou non de la distribution de boisson selon que le contenant soit bien positionné ou non dans la zone de détection DET. La détermination d'un volume de boisson à délivrer (et indirectement la quantité de matière première - thé ou café par exemple - nécessaire à la production du volume de boisson) selon la hauteur du contenant et éventuellement son diamètre. L'arrêt du versement de la boisson par le distributeur 10 lorsque le contenant 12 est suffisamment rempli.

La **Figure 4** illustre un premier mode de réalisation d'opérations réalisées par le processeur, par exemple le processeur 107B, pour la détermination d'une ou plusieurs grandeurs physiques relatives au contenant 12, notamment sa hauteur, son diamètre et sa position dans la zone de détection DET.

Le processeur comprend un bloc (moyens ou opérations) 400 pour l'obtention de la matrice d'histogrammes MATRIX, un bloc (moyens ou opérations) 410 pour l'extraction du FSB par histogramme et ainsi obtenir la matrice $M_{FSB}$ et un bloc (moyens ou opérations) 420 pour déterminer le ou les grandeurs physiques à partir de la matrice MFSB.

Dans le mode de réalisation illustré, l'obtention 400 de la matrice d'histogrammes MATRIX peut consister simplement à recevoir la matrice MATRIX du capteur ToF. On note, sur la Figure, « H » chaque histogramme reçu, les traitements décrits ci-après étant réalisés histogramme par histogramme lorsque la mention 8x8, indiquant la dimension de la matrice, est précisée. Bien entendu, toute autre dimension de matrice que 8x8 peut être envisagée, notamment des dimensions non carrés ($n \times m$ où $n \neq l$). En particulier, une matrice 1x1 correspond à un unique histogramme obtenu du capteur ToF, lequel est par conséquent simple zone.

Bien que non représenté, des prétraitements de l'histogramme H peuvent être prévus pour en réduire le bruit ou améliorer sa qualité compte tenu d'éléments environnants connus. A titre d'exemple, un traitement de suppression d'un voile éblouissant peut être envisagé.

Chaque histogramme H est fourni en entrée du bloc 410 d'extraction des FSB, appelés simplement bloc FSB.

Dans un mode de réalisation, optionnel, le bloc FSB 410 reçoit également une mesure de bruit ambiant BA. La mesure de bruit ambiant BA est effectuée par le capteur ToF 100 entre deux impulsions lumineuses. Typiquement, le capteur ToF réalise une mesure du bruit ambiant sensiblement au moment de l'impulsion lumineuse (générant la matrice MATRIX), en pratique juste avant l'impulsion (entre l'impulsion précédente et l'impulsion de la matrice MATRIX) ou juste après l'impulsion. Dans un mode de réalisation, une telle mesure est réalisée de façon périodique, la dernière mesure BA disponible étant alors utilisée.

La mesure de BA peut consister à mesurer le niveau moyen de photons reçus par chaque sous-zone de capteur pendant une durée T de bin. Dans ce cas, 8x8 mesures de BA sont générées et sont utilisées respectivement lors du traitement de l'histogramme H correspondant à la même sous-zones.

En variante, la mesure de BA peut être unique pour l'ensemble des histogrammes. Par exemple, le résultat de l'acquisition d'une sous-zone pendant la durée T peut être pris comme mesure de BA pour le capteur ToF. En variante, la quantité de photons acquis pour l'ensemble du capteur divisé par le nombre de sous-zones peut être utilisé comme mesure de BA pour la matrice MATRIX à traiter.

Le cas échéant, une formule de conversion de la quantité de photons acquis en une mesure de BA peut être utilisée.

L'extraction des FSB des histogrammes H comprend tout d'abord l'extraction 411 de caractéristiques impulsionnelles dans chaque histogramme H.

Ces caractéristiques impulsionnelles comprennent typiquement l'amplitude de pic ou maximale $A_{max} = \max\{A_j\}$, le bin de front montant BFM et le bin de front descendant BFD (les premiers fronts rencontrés en cas de pluralité d'impulsions dans l'histogramme). Typiquement, le bin de front BF (montant ou descendant) peut être déterminée comme celui correspondant à 50% ou 60% (ou tout autre pourcentage significatif) de l'amplitude de pic.

Dans un mode de réalisation, ces bins de front montant et descendant BFM, BFD permettent de calculer une largeur d'impulsion L=BFD-BFM, qui correspond à une durée. Une impulsion dont la largeur est inférieure à un seuil de largeur peut alors être ignorée dans l'histogramme. Si tel est le cas, on passe à l'impulsion suivante (s'il y a plusieurs impulsions dans l'histogramme).

De façon similaire, ces bins de front montant et descendant BFM, BFD déterminés pour de multiples réponses d'impulsion dans l'histogramme peuvent permettre d'identifier la réponse à l'impulsion ayant la plus grande largeur, utilisée pour les opérations suivantes.

Le bloc FSB obtient un seuil de premier bin SPB fonction du pic d'impulsion $A_{max}$ de l'histogramme. Il s'agit par exemple d'un pourcentage k1 prédéfini (3%, 4% ou 5%) du pic d'impulsion de l'histogramme.

Néanmoins, afin de filtrer le bruit ambiant, le seuil de premier bin SPB peut être fixé au moins égal à un seuil de bruit ambiant, égal à k2 * BA (k2 ≥ 1). Cela signifie que SPB = max { k1 * $A_{max}$, k2 * BA}.

Une fois le seuil SPB déterminé, le bloc FSB 410 détermine le premier bin FSB de chaque histogramme H, dans l'ordre des bins de l'histogramme, dont l'amplitude $A_j$ dépasse SPB. Si aucun bin ne satisfait la condition, aucun bin n'est retournée comme résultat.

Dans un mode de réalisation, le bloc FSB 410 produit ainsi une matrice $M_{FSB}$ constituée des 8x8 FSB ainsi déterminés.

Dans un autre mode de réalisation, le bloc FSB 410 modifie cette matrice de premiers bins d'histogrammes par interpolation entre chaque premier bin FSB extrait (qui correspond à un premier temps de vol) et le bin $B_i$ le précédant dans le même histogramme (donc $B_i$ = FSB - 1, qui correspond à un deuxième temps de vol), de sorte à obtenir une matrice modifiée de premiers bins. Notamment, les bins de la matrice d'histogramme peuvent être des entiers, alors que les valeurs interpolées peuvent être des valeurs décimales, offrant ainsi une matrice de premiers bins plus précise.

Par exemple, on prend le temps de vol à mi-chemin entre les deux classes $B_i$ et FSB (ou $B_{FSB}$).

Dans un autre mode de réalisation, l'interpolation est une interpolation linéaire fonction d'un seuil de premier bin utilisé pour identifier le premier bin des histogrammes, et fonction des amplitudes respectives du premier bin et du bin le précédant. A titre illustratif seulement, si le premier bin correspond à la valeur 11 et présente une amplitude de 1500 (en quantité de photons), le bin précédant correspond à la valeur 10 et présente une amplitude de 1000, et le seuil SPB vaut 1100, l'interpolation pondérée par les amplitudes (poids de 1100-1000 pour le bin précédent et poids de 1500-1100 pour le premier bin) donne un premier bin modifié ou corrigé de 10,2. De la sorte, la matrice modifiée de premiers bins est plus précise eu égard au seuil SPB.

Le bloc FSB 410 retourne ainsi une matrice modifiée $M_{FSB}$ constituée de 8x8 premiers bins modifiés. Celle-ci alimente le bloc 420.

Le bloc 420 est alors en mesure de déterminer une hauteur du contenant 12 en sélectionnant la valeur minimale dans la matrice de premiers bins d'histogrammes $M_{FSB}$ reçue. Que cette matrice indique un bin ou un temps de vol interpolé, éventuellement corrigé, la valeur minimale sélectionnée correspond à une distance mesurée DM.

Dans un mode de réalisation tel qu'illustré, cette sélection peut comprendre d'abord la conversion de la matrice $M_{FSB}$ en une matrice de distances, en convertissant chaque bin (ou temps de vol) en une distance par le sous-bloc BtoR (pour « bin to range » en anglais).

La conversion en distances permet, dans certains modes de réalisation, de compenser / corriger d'éventuelles erreurs de calibration du capteur ToF.

La hauteur HAUT du contenant 12 est alors obtenue, par le sous-bloc 421 de conversion dans le référentiel (O,X,Y), en soustrayant la distance mesurée DM à la distance DIST de la surface de la zone de détection DET.

En parallèle, pour la détermination du diamètre et de la position du contenant 12 dans le référentiel, une matrice binaire MXB4 signalant les bins ou temps de vol ou distances correspondant aux bins de la matrice de premiers bins d'histogrammes $M_{FSB}$ qui sont inférieurs à une valeur seuil S4 est générée. Typiquement, cette valeur seuil S4 est représentative d'une distance un peu inférieure à DIST, par exemple inférieure de 10 à 40 mm.

Dans ce mode de réalisation (détermination du diamètre), le bloc 410 reçoit également les 8x8 histogrammes H du bloc 400, desquels il extrait ou détermine (sous-bloc 422) des caractéristiques impulsionnelles dans chaque histogramme H.

Ces caractéristiques impulsionnelles comprennent le bin de front montant BFM (déjà décrit plus haut). Cela permet de convertir la matrice d'histogrammes MATRIX en une matrice de fronts montants $M_{FM}$ identifiant des bins ou temps de vol ou distances correspondant au front montant de l'impulsion dans les histogrammes.

De cette matrice $M_{FM}$, il est possible de générer deux matrices binaires correspondant respectivement à une matrice MXB1 signalant les bins ou temps de vol ou distances de la matrice de fronts montants $M_{FM}$ qui sont inférieurs à une première valeur seuil S1 et une matrice MXB2 signalant les bins ou temps de vol ou distances de la matrice de fronts montants qui sont supérieurs à une deuxième valeur seuil S2.

Les valeurs seuil S1 et S2 peuvent par exemple être choisie proches de DIST afin de séparer les bins correspondant à des cibles mesurées au-dessus de la surface de la zone de détection DET, des bins correspondant à des cibles mesurées en dessous (à raison de la réflexion du rayon lumineux dans la tasse 12).

Dans un mode de réalisation, S1 et S2 sont indépendants. Leurs valeurs peuvent être déterminées de manière empirique ou à partir de tests permettant d'identifier quelles valeurs offrent de bons résultats de détection d'un rebord supérieur de contenant 12.

De préférence, les matrices MXB1 et MXB2 sont formées à partir de la matrice de fronts montants $M_{FM}$ convertie en distances (bloc BtoR).

Dans un mode de réalisation, les caractéristiques impulsionnelles peuvent également comprendre le bin $B_{max}$ de pic d'impulsion, le bin de front descendant BFD (déjà décrite plus haut) et une mesure de distorsion d'impulsion DISTOR pour indiquer le niveau de distorsion de la réponse impulsionnelle reçue. En effet, il a été constaté que les histogrammes correspondant au rebord du contenant présentent une forme inattendue. La prise en compte de la distorsion des histogrammes contribue ainsi à une meilleure détection des dimensions et position du contenant.

Typiquement, la mesure de distorsion d'impulsion DISTOR peut être obtenue par la formule suivante :

$$DISTOR = (B_{max}\text{-}BFM)/(BFD\text{-}BFM).$$

Il peut être considéré qu'une mesure DISTOR inférieure à 75% indique une réponse distordue à l'impulsion.

On déterminer ainsi une valeur de distorsion DISTOR pour chaque histogramme H de la matrice d'histogrammes MATRIX, la détermination d'une valeur de distorsion étant fonction des trois bins correspondant respectivement au pic d'impulsion $B_{max}$, au front montant de l'impulsion BFM et au front descendant de l'impulsion BFD.

Ces 8x8 mesures DISTOR permettent de générer une autre matrice binaire MXB3 signalant les histogrammes ayant une faible valeur de distorsion (i.e., sous une valeur seuil de distorsion S3).

Les quatre matrices binaires MXB1 à MXB4 représentent ainsi quatre versions différentes de filtrage de la matrice MATRIX pour caractériser les mesures du contenant 12 selon quatre aspects différents.

Ces quatre matrices (ou plus généralement une à quatre, selon lesquelles sont disponibles, certains modes de réalisation pouvant n'en générer qu'une partie) sont fournies en entrée d'un module de détermination de meilleur cercle (sous-bloc 423).

Un tel module peut par exemple mettre en œuvre la transformée de Hough de cercle (« circle Hough Transform » ou CHT en anglais). Il s'agit d'une technique d'extraction de caractéristiques de base utilisée dans le traitement des images numériques pour détecter les cercles dans les images imparfaites. Cette technologie étant connue de l'homme de l'art, elle n'est pas décrite ici plus en détails.

Elle permet par exemple d'identifier un (meilleur) cercle candidat dans chacune des matrices. Le sous-bloc 423 peut alors choisir le meilleur cercles parmi les candidats, en utilisant tout métrique connue.

Dans un mode de réalisation, chaque matrice MXB1 à MXB4 est analysée pour déterminer le nombre de zones actives (nombre de 1 dans la matrice). La transformée de Hough de cercle est appliqué sur toute matrice qui a suffisamment de zones actives (nombre de 1 supérieur à un seuil, par exemple 12 pour une matrice 8x8), de sorte à identifier un cercle candidat. Si aucune des matrices n'a suffisamment de zones actives, elles peuvent être regroupées (opération binaire OU sous-zone par sous-zone) et la transformée de Hough de cercle est appliqué à la matrice résultante.

Le sous-bloc 423 détermine ainsi un cercle à partir des matrices binaires en entrée.

Le diamètre 'diam' et la position x0, y0 du cercle ainsi déterminés (valeurs dans l'image MATRIX) sont désormais connus.

Le sous-bloc 421 de conversion permet alors d'obtenir le diamètre DIAM et les coordonnées X0, Y0 du contenant 12 dans le référentiel (O,X,Y) de la zone de détection DET.

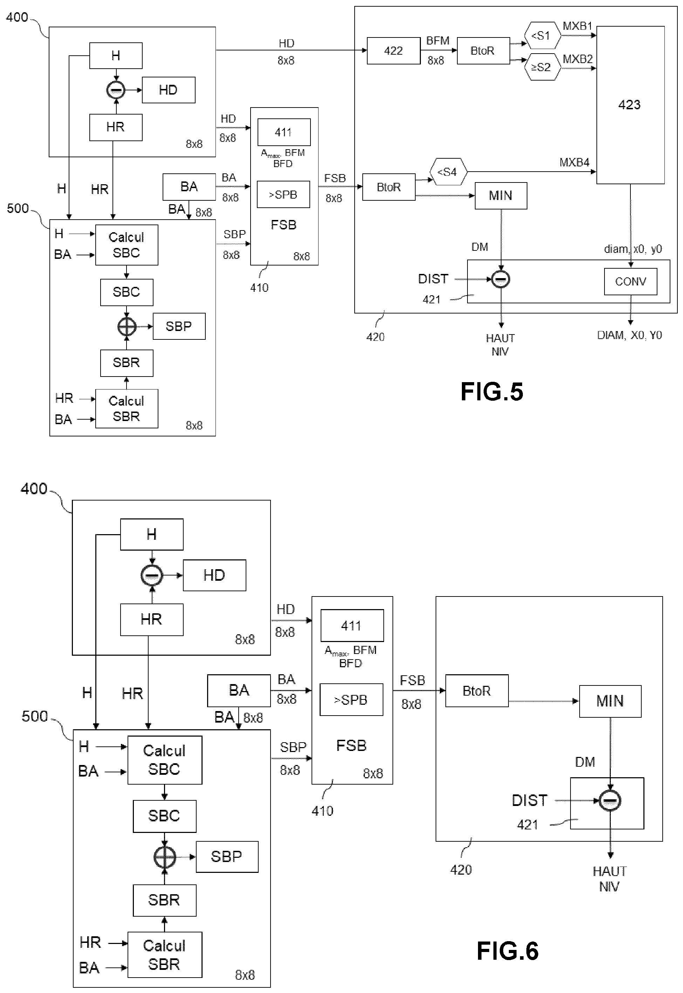

La **Figure 5** illustre un deuxième mode de réalisation d'opérations réalisées par le processeur, par exemple le processeur 107B, pour la détermination d'une ou plusieurs grandeurs physiques relatives au contenant 12.

Ce deuxième mode de réalisation permet de supprimer tout objet interférant dans le champ de vision FoV (pour « field of view » en anglais) du capteur ToF. Par exemple, la paroi arrière du distributeur 10 peut être détectée par le capteur ToF et peut nuire à la précision de la mesure de la hauteur de la tasse 12, en particulier si une partie de la paroi arrière est située plus proche du capteur que le haut de la tasse 12.

De façon similaire, la tasse 12 elle-même peut nuire à la précision de la mesure de la hauteur de remplissage de la tasse 12 (donc la hauteur du liquide qu'y est versé).

Dans ce contexte, le deuxième mode de réalisation prévoit d'enregistrer une image de référence avant la présence de la cible (soit la tasse 12, soit la boisson qui y est versée), et de l'utiliser comme connaissance *a priori* afin de corriger une image courante acquise, typiquement afin de la soustraire à l'image courante. En d'autres termes, une matrice $REF_{MATRIX}$ d'histogrammes de référence HR est soustraite à la matrice d'histogrammes MATRIX reçue pour obtenir une matrice $DIFF_{MATRIX}$ d'histogrammes de différences HD. L'extraction des FSB est alors effectuée dans ces histogrammes de différences HD. A cette fin, le bloc 400 d'obtention de la matrice d'histogrammes comprend un module de soustraction d'histogrammes : HD = H- HR.

La matrice $REF_{MATRIX}$ d'histogrammes de référence HR est acquise au préalable (avant la matrice MATRIX en cours de traitement) par le capteur temps de vol 100. Les données des histogrammes de référence HR sont donc stockés temporairement par le processeur 107B.

Il peut s'agir notamment d'une matrice MATRIX acquise antérieurement de la zone de détection avant d'y placer la tasse 12. Une telle configuration est préférablement utilisée pour la détermination de la hauteur de la tasse 12.

En variante, il peut s'agir d'une matrice MATRIX (acquise antérieurement) de la tasse vide dans la zone de détection, avant d'en procéder à son remplissage. Une telle configuration est préférablement utilisée pour mesurer la hauteur de remplissage de la tasse.

Dans une variante permettant une mesure encore plus précise de la hauteur de remplissage de la tasse, il peut s'agir d'une matrice MATRIX (acquise antérieurement) de la tasse dans la zone de détection dans laquelle un remplissage a déjà débuté et avant de poursuivre le remplissage. Par exemple, cette matrice peut correspondre à celle acquise au bout de quelques dixièmes de seconde après le déclenchement du versement de la boisson ou lorsqu'un niveau prédéterminé de produit / liquide (e.g., 10 mm) a déjà été versé. Une telle configuration permet en effet d'atténuer, dans la matrice $DIFF_{MATRIX}$ ensuite analysée, à la fois la présence de la tasse 12 et les reflets du liquide en fond de tasse, mais également le signal issu du jet de remplissage (présent dans le champ de vision du capteur ToF).

Ce qui a été décrit en lien avec la **Figure 4** peut dès lors s'appliquer aux histogrammes de différences HD pour obtenir une hauteur HAUT de la tasse 12, son diamètre DIAM et sa position X0, Y0 dans le référentiel (O,X,Y).

A noter que la matrice binaire MXB3 peut être omise dans la mesure où la soustraction d'histogrammes modifie substantiellement la forme de l'histogramme analysé.

Dans un mode de réalisation, le processeur 107B comporte un bloc (moyens ou opérations) 500 pour l'obtention de seuils de bruit de bins. Ces seuils sont calculés, pour chaque histogramme H, à partir de cet histogramme H, de l'histogramme de référence HR correspondant (i.e., correspondant à la même sous-zone de capteur dans la matrice de référence $REF_{MATRIX}$) et du bruit ambiant BA (déjà évoqué plus haut).

En détails, le bloc 500 peut, d'une part, calculer un seuil de bruit courant de bin $SBC(H, B_j)$ pour chaque bin de chaque sous-zone de capteur, i.e., pour chaque bin $B_j$ de chaque histogramme H. Le seuil $SBC(H, B_j)$ est calculé à partir de l'amplitude du bin correspondant $A_j$ dans l'histogramme H et de la mesure de bruit ambiant courant BA (éventuellement par sous-zone), par exemple :

$$SBC(H, B_j) = k3 * \sqrt{(BA)} + k4 * A_j,$$

où $\sqrt{}$ est la racine carrée, et k3 et k4 sont deux paramètres, k3 correspondant à un facteur d'échelle de bruit ambiant (e.g., k3 = 1,4) et k4 correspondant à un facteur d'échelle de signal (e.g., k4 = 0,1).

D'autre part, le bloc 500 calculer un seuil de bruit de référence de classe $SBR(H, B_j)$ pour chaque bin de chaque sous-zone de capteur, i.e., pour chaque bin $B_j$ de chaque histogramme de référence HR. Le seuil $SBR(HR, B_j)$ est calculé à partir de l'amplitude du bin correspondant $A_j$ dans l'histogramme de référence HR et de la mesure de bruit ambiant de référence BA (éventuellement par sous-zone). La même formule que ci-dessus peut être utilisée, seul variant l'amplitude $A_j$ considérée (ici dans l'histogramme de référence HR).

Un seuil de bruit prédéterminé pour chaque bin $SBP(H, B_j)$ peut alors être déterminé par l'addition du seuil de bruit courant $SBC(H, B_j)$ et du seuil de bruit de référence $SBR(HR, B_j)$ déterminés pour cette classe, soit $SBP(H, B_j) = SBC(H, B_j) + SBR(HR, B_j)$.

Ces seuils de bruit prédéterminés (au nombre de Nx8x8 pour N bins par histogramme et 8x8 sous-zones de capteur) $SBP(HR, B_j)$ sont stockés temporairement par le processeur 107B et fournis en entrée du bloc FSB 410 qui en tient compte dans l'extraction des premiers bins de front montant d'impulsion.

Dans un mode de réalisation, le bloc FSB 410 peut ignorer, dans tout histogramme H traité, un bin $B_j$ dont l'amplitude $A_j$ est inférieure au seuil de bruit prédéterminé pour ce bin $SBP(H, B_j)$.

Par exemple, lors de la recherche de la réponse d'impulsion la plus large dans l'histogramme H, il peut être prévu de seulement tenir compte des bins dont l'amplitude est supérieure à leur seuil $SBP(H, B_j)$ associé.

La **Figure 6** illustre un troisième mode de réalisation d'opérations réalisées par le processeur, par exemple le processeur 107B, pour la détermination d'une ou plusieurs grandeurs physiques relatives au contenant 12. Il s'agit d'une version simplifiée du deuxième mode de réalisation, particulièrement adapté à la mesure d'une hauteur (soit du contenant, soit de remplissage).

De ce fait, la détermination des matrices MXB1 à MXB4 et leur utilisation pour obtenir le diamètre DIAM et la position (X0, Y0) du contenant 12 sont omises.

Une première exécution des opérations de la Figure permet donc d'obtenir une mesure de la hauteur HAUT de la tasse 12.

Une deuxième exécution des opérations de la Figure permet d'obtenir une mesure de la hauteur de remplissage NIV de la tasse 12 par le liquide délivré par le distributeur 10.

La deuxième exécution peut suivre immédiatement la première exécution. Le processeur 107B acquiert donc la hauteur de la tasse 12, peut commander la distribution d'une boisson dans la tasse 12 et arrêter la distribution lorsque le niveau NIV de remplissage atteint une valeur prédéfinie, par exemple 80% de la hauteur de la tasse 12.

En variante, la deuxième exécution peut suivre une exécution du deuxième mode de réalisation de la **Figure 5** au cours duquel le diamètre 'diam' (ou DIAM dans le référentiel (O,X,Y)) et la position (x0, y0) (ou X0, Y0) du contenant 12 sont mesurés.

Dans cette variante, il est possible de réduire les traitements de cette deuxième exécution en limitant la sélection de la valeur minimale (par le bloc 420) aux seules sous-zones de capteur situées au moins partiellement dans le cercle de centre (x0, y0) et de diamètre 'diam'.

La **Figure 7** illustre la précision accrue dans la détermination de la hauteur HAUT de trente-trois contenants 12.

Le graphique du haut représente les hauteurs HAUT mesurées par l'utilisation classique d'un capteur ToF (bâton de gauche dans chaque paire de bâtons) à côté des hauteurs réels (bâton de droite). On observe une surestimation excessive des distances entre le capteur ToF et le rebord supérieur des contenants 12, conduisant à une sous-estimation excessive de leur hauteur.

Le graphique du bas illustre les hauteurs HAUT mesurées par l'utilisateur d'un capteur ToF en utilisant la matrice $M_{FSB}$ décrite ci-dessus, à côté des hauteurs réelles. On observe une très nette amélioration de la mesure.

Un contrôle amélioré de l'automatisation de distributeurs de boisson peut donc être obtenu.

La **Figure 8** illustre une architecture matérielle pour l'unité de traitement 107 de la **Figure 1.** Elle comprend un bus de communication 801 auquel sont préférablement connectés :

- une ou plusieurs unités centrales de traitement 802, telles qu'un ou des processeurs CPU et/ou un ou des microprocesseurs ;
- une mémoire de stockage 803, de type ROM et/ou mémoire flash, pour le stockage de programmes informatiques destinés à mettre en œuvre tout ou partie des opérations décrites ci-dessus ;
- une mémoire vive 804, de type RAM voire vidéo RAM (VRAM), pour le stockage du code exécutable des programmes informatiques ainsi que les registres adaptés pour enregistrer des variables et des paramètres nécessaires à leur exécution ;
- une interface de communication ou des broches 805 connectée aux autres éléments du capteur, notamment aux arbres combinatoires OR 108 combinant les SPAD ; et
- une ou plusieurs entrées/sorties I/O 806 permettant à un opérateur d'interagir avec les programmes informatiques et définir par exemple des paramètres de fonctionnement (par exemple les paramètres k1 à k4).

Le bus de communication 801 assure la communication et l'interopérabilité entre les différents éléments inclus dans l'unité de traitement 107 ou connectés à celle-ci.

L'unité centrale 802 est de préférence adaptée pour contrôler et diriger l'exécution des instructions ou des parties de code logiciel du ou des programmes informatiques. À la mise sous tension, le ou les programmes qui sont stockés en mémoire non volatile 803 sont transférés/chargés dans la mémoire vive 804, qui contient alors le code exécutable du ou des programmes, ainsi que des registres pour le stockage des variables et des paramètres nécessaires à la mise en œuvre des procédés décrits.

Bien entendu, la présente divulgation ne se limite pas aux formes de réalisation décrites ci-avant à titre d'exemples ; elle s'étend à d'autres variantes. D'autres réalisations sont possibles.

**Revendications**

1. Procédé de mesure d'une grandeur physique (HAUT, NIV, DIAM, X0, Y0) d'un contenant (12) placé dans une zone de détection (DET), en utilisant un capteur temps de vol (100), le procédé comprenant, par un processeur (107B) :

la réception (300) d'au moins un histogramme (H, HD) généré à partir d'une impulsion lumineuse émise par un capteur temps de vol et réfléchie par le contenant, l'histogramme (H, HD) étant formé de classes dites « bins » ($B_j$) correspondant à des temps de vol distincts, l'extraction (310), dans l'histogramme, d'un premier bin d'histogramme (FSB) à la base d'un front montant d'impulsion caractérisant en premier le front montant d'impulsion, et la détermination (320) de la grandeur physique à partir du premier bin d'histogramme, en convertissant un temps de vol associé au premier bin d'histogramme en une distance.

2. Procédé selon la revendication 1, dans lequel le capteur de vol (100) est un capteur temps de vol multi-zones et dans lequel une pluralité d'histogrammes, formant matrice (MATRIX, $DIFF_{MATRIX}$), générés à partir de l'impulsion lumineuse est reçue, chaque histogramme étant formé de bins correspondant à des temps de vol distincts,

un premier bin d'histogramme caractérisant en premier un front montant d'impulsion est extrait de chaque histogramme, de sorte à obtenir une matrice ($M_{FSB}$) de premiers bins d'histogrammes, et

la grandeur physique est déterminée à partir de la matrice de premiers bins d'histogrammes.

3. Procédé selon la revendication 1 ou 2, comprenant une modification du premier bin d'histogramme par interpolation entre le premier bin extrait et le bin le précédant dans l'histogramme.

4. Procédé selon la revendication 3, dans lequel l'interpolation comprend une interpolation linéaire fonction d'un seuil de premier bin (SPB) utilisé pour identifier le premier bin des histogrammes, et fonction des amplitudes ($A_j$) respectives du premier bin et du bin le précédent.

5. Procédé selon la revendication 2, dans lequel la détermination de la grandeur physique comprend la sélection de la valeur minimale dans la matrice de premiers bins d'histogrammes et la conversion de la valeur minimale sélectionnée en une hauteur du contenant ou une hauteur de remplissage du contenant.

6. Procédé selon la revendication 2 ou 5, dans lequel la détermination de la grandeur physique comprend :

la conversion de la matrice d'histogrammes en une matrice de fronts montants identifiant des bins ou temps de vol ou distances (BFM) correspondant au front montant de l'impulsion dans les histogrammes, la génération de deux matrices binaires correspondant respectivement à une matrice (MXB1) signalant les bins ou temps de vol ou distances de la matrice de fronts montants qui sont inférieurs à une première valeur seuil (S1) et une matrice (MXB2) signalant les bins ou temps de vol ou distances de la matrice de fronts montants qui sont supérieurs à une deuxième valeur seuil (S2),

la génération d'une troisième matrice binaire (MXB4) signalant les bins ou temps de vol ou distances correspondant aux bins de la matrice de premiers bins d'histogrammes ($M_{FSB}$) qui sont inférieurs à une troisième valeur seuil (S4), et

la détermination d'un cercle dans la matrice d'histogrammes (MATRIX, $DIFF_{MATRIX}$), à partir des trois matrices binaires.

7. Procédé selon la revendication 6, dans lequel la détermination de la grandeur physique comprend en outre :

la détermination d'une valeur de distorsion pour chaque histogramme de la matrice d'histogrammes, la détermination d'une valeur de distorsion étant fonction des trois bins correspondant respectivement au pic d'impulsion ($B_{max}$), au front montant de l'impulsion (BFM) et au front descendant de l'impulsion (BFD), et

la génération d'une quatrième matrice binaire signalant les histogrammes ayant une faible valeur de distorsion,

procédé dans lequel la détermination du cercle est également fonction de la quatrième matrice binaire.

8. Procédé selon l'une des revendications 1 à 7, comprenant la réception d'un histogramme (H) générée par le capteur temps de vol, la soustraction d'un histogramme de référence (HR) à l'histogramme reçu pour obtenir un histogramme de différences (HR),

procédé dans lequel ladite extraction est effectuée sur l'histogramme de différences.

9. Procédé selon la revendication 8, dans lequel l'histogramme de référence (HR) est acquis au préalable par le capteur temps de vol, parmi :

un histogramme de la zone de détection avant d'y placer le contenant,

un histogrammes du contenant vide dans la zone de détection avant de procéder à son remplissage, et

un histogramme du contenant dans la zone de détection dans lequel un remplissage a débuté, avant de poursuivre le remplissage.

10. Procédé selon l'une des revendications 1 à 9, dans lequel l'extraction du premier bin d'un histogramme comprend :

obtenir un seuil de premier bin (SPB) fonction d'un pic ($A_{max}$) d'impulsion de l'histogramme, et déterminer le premier bin ($B_{FSB}$), dans l'ordre des bins ($B_j$) de l'histogramme, dont l'amplitude ($A_j$) dépasse le seuil de premier bin.

11. Procédé selon la revendication 10, dans lequel le seuil de premier bin (SPB) est déterminé à partir d'un pourcentage prédéfini du pic ($A_{max}$) d'impulsion de l'histogramme.

12. Procédé selon la revendication 10, comprenant la détermination d'un seuil de bruit ambiant (BA) lors de l'impulsion lumineuse, le seuil de premier bin étant fixé au moins égal au seuil de bruit ambiant.

13. Procédé selon l'une des revendications 1 à 12, dans lequel l'extraction du premier bin de l'histogramme comprend en outre un ou plusieurs traitements parmi :

ignorer, dans l'histogramme, une impulsion dont la largeur est inférieure à un seuil de largeur, et ignorer, dans l'histogramme, un bin ($B_j$) dont l'amplitude ($A_j$) est inférieure à un seuil de bruit prédéterminé (SBP) pour ce bin.

14. Procédé selon la revendication 13, comprenant :

la détermination, pour chaque bin ($B_j$) de l'histogramme (H), d'un seuil de bruit courant (SBC) à partir de l'amplitude ($A_j$) du bin correspondant dans l'histogramme et d'une mesure de bruit ambiant courant (BA),
la détermination, pour chaque bin ($B_j$) de l'histogramme, d'un seuil de bruit de référence (SBR) à partir de l'amplitude ($A_j$) du bin correspondant dans l'histogramme de référence (HR) et d'une mesure de bruit ambiant de référence (BA), et l'obtention d'un seuil de bruit prédéterminé (SBP) pour chaque bin, par l'addition du seuil de bruit courant et du seuil de bruit de référence déterminés pour ce bin.

15. Système de mesure par temps de vol d'une grandeur physique d'un contenant (12) placé dans une zone de détection (DET), le système comprenant :

un capteur temps de vol (100) configuré pour générer au moins un histogramme (H, HD) à partir d'une impulsion lumineuse émise par un capteur temps de vol et réfléchie par le contenant, l'histogramme (H, HD) étant formé de classes dites « bins » ($B_j$) correspondant à des temps de vol distincts, et
un processeur (107D) configuré pour recevoir l'histogramme, pour extraire, dans l'histogramme, un premier bin d'histogramme (FSB) à la base d'un front montant d'impulsion caractérisant en premier le front montant d'impulsion, et pour déterminer la grandeur physique à partir du premier bin d'histogramme, en convertissant un temps de vol associé au premier bin d'histogramme en une distance.

16. Distributeur de boisson (10) comprenant une zone (DET) de positionnement d'un contenant (12) pour y distribuer une boisson et un système de mesure par temps de vol selon la revendication 15.

17. Distributeur de boisson (10) selon la revendication 16, dans lequel un mécanisme de commande de distribution de boisson dans le contenant est contrôlé par une grandeur physique du contenant (12) déterminée par le système de mesure par temps de vol.

FIG.1

EP 4 647 807 A1

FIG.2

FIG.3

FIG.4

16

FIG.5

FIG.6

17

**FIG.7**

**FIG.8**

**EP 4 647 807 A1**

Europäisches Patentamt

European Patent Office

Office européen des brevets

## RAPPORT DE RECHERCHE EUROPEENNE

**Numéro de la demande**

**EP 25 17 2602**

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 10 2013 114737 A1 (ENDRESS & HAUSER GMBH & CO KG [DE]) 25 juin 2015 (2015-06-25) * alinéas [0001], [0053], [0057]; figure 4 * | 1-17 | INV. G01S7/4865 G01F23/292 G01S17/10 G01S17/88 |
| A | Unknown ET AL: "Latest Time-of-Flight sensor solutions and applications", , 24 octobre 2023 (2023-10-24), pages 1-35, XP093221717, Extrait de l'Internet: URL:https://www.st.com/resource/en/applica tion_presentation/oct24th-2023-latest-time -of-flight-sensor-solutions-and-applicatio ns.pdf [extrait le 2024-11-06] * page 17 - page 19 * | 2,8,9, 16,17 | |
| A | US 2021/389462 A1 (WANG CHUNJI [US] ET AL) 16 décembre 2021 (2021-12-16) * alinéas [0006], [0072]; figures 3, 4B * | 2 | |
| A | US 2022/120600 A1 (LIU FENG-CHI [TW] ET AL) 21 avril 2022 (2022-04-21) * alinéas [0004], [0013], [0015]; figures 2, 5 * | 1,15-17 | **DOMAINES TECHNIQUES RECHERCHES (IPC)** G01S G01F |

Le présent rapport a été établi pour toutes les revendications

| Lieu de la recherche | Date d'achèvement de la recherche | Examinateur |
|---|---|---|
| Munich | 18 septembre 2025 | Kirscher, Jérôme |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

............................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 17 2602

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-09-2025

| Document brevet cité au rapport de recherche | Date de publication | Membre(s) de la famille de brevet(s) | Date de publication |
|---|---|---|---|
| DE 102013114737 A1 | 25-06-2015 | DE 102013114737 A1 | 25-06-2015 |
| | | WO 2015090770 A1 | 25-06-2015 |
| US 2021389462 A1 | 16-12-2021 | KR 20210153563 A | 17-12-2021 |
| | | US 2021389462 A1 | 16-12-2021 |
| US 2022120600 A1 | 21-04-2022 | CN 114370911 A | 19-04-2022 |
| | | US 2022120600 A1 | 21-04-2022 |
| | | US 2024077350 A1 | 07-03-2024 |

EPO FORM P0460

Pour tout renseignement concernant cette annexe : voir Journal Officiel de l'Office européen des brevets, No.12/82